# EUROPÄISCHE PATENTSCHRIFT

(11) **EP 3 350 852 B1**
(45) Veröffentlichungstag und Bekanntmachung des Hinweises auf die Patenterteilung: **20.09.2023**
(21) Anmeldenummer: 16727203.8
(22) Anmeldetag: 06.06.2016
(51) Int. Cl.: H01M 10/615, H01M 10/653, H01M 10/663, H01M 10/6563, H01M 10/647, H01M 10/6566, H01M 10/613, H01M 10/052, H01M 50/202, H01M 50/233, H01M 50/227, H01M 50/211

(54) **GEHÄUSEANORDNUNG FÜR ZUMINDEST EINE BATTERIEZELLE**
HOUSING ARRANGEMENT FOR AT LEAST ONE BATTERY CELL
ENSEMBLE BAC POUR AU MOINS UN ÉLÉMENT DE BATTERIE

(30) Priorität: 17.09.2015 DE 102015115728
(43) Veröffentlichungstag der Anmeldung: 25.07.2018
(73) Patentinhaber: INTILION GmbH, 08056 Zwickau (DE)
(72) Erfinder: REINHOLD, Stefan, 08058 Zwickau (DE)
(74) Vertreter: Bals & Vogel Patentanwälte PartGmbB
(86) Internationale Anmeldenummer: PCT/EP2016/062809
(87) Internationale Veröffentlichungsnummer: WO 2017/045783

(56) Entgegenhaltungen:
- EP-A2- 2 562 848
- CN-A- 102 315 476
- US-A1- 2012 088 132

## Beschreibung

Die vorliegende Erfindung betrifft eine Gehäuseanordnung für eine Batteriezelle, vorzugsweise eine Lithium-Batterie-Zelle und/oder eine Lithium-Pouch-Zelle. Ferner bezieht sich die Erfindung auf ein Batteriesystem, ein Verfahren sowie ein Lüftungssystem.

Es ist aus dem Stand der Technik bekannt, dass Batteriezellen, insbesondere die Batteriezellen von Lithiumbatterien, beispielsweise im so genannten Pouch-Zellen-Format (beziehungsweise auch Pouch-Bag-Zelle oder Coffee-Bag-Zelle) ausgeführt sind. Hierbei ist das Gehäuse der Batteriezelle meist nicht starr ausgebildet, sondern umfasst eine Folie, welche beispielsweise aus Aluminium hergestellt ist. Das Gehäuse und/oder die Batteriezelle weist somit eine gewisse Flexibilität auf und die Batteriezelle besitzt damit vielseitige Einsatzmöglichkeiten.

US2012/088132 offenbart ein Batteriesystem mit mehreren Pouch-Zellen und mit mehreren Rahmenelemente und Lüftungsausnehmungen.

Da die Batteriezelle meist nur in einer Folie eingeschweißt vorliegt, weist die Batteriezelle für viele Anwendungen eine nicht ausreichende mechanische Stabilität auf. Aufgrund der hohen Leistung und Energiedichte von Lithiumbatterien kann es ferner zu einem Temperaturanstieg kommen, durch welchen eine Beschädigung der Lithiumbatterie beziehungsweise der Batteriezellen möglich ist. Dabei können sowohl zu niedrige als auch zu hohe Temperaturen zu kritischen Zuständen führen, da die Batteriezelle möglichst in einem spezifischen Temperaturbereich betrieben werden sollte. Auch eine Differenz der Betriebstemperatur für unterschiedliche Zellen eines Batteriesystems ist dabei problematisch, da dies zu einer ungleichmäßigeren Alterung der Batteriezellen führt.

Es ist daher eine Aufgabe der vorliegenden Erfindung, die voranstehend beschriebenen Nachteile zumindest teilweise zu beheben. Insbesondere soll eine Gehäuseanordnung bereitgestellt werden, welche die Stabilität der Batteriezellen und/oder der Batterie verbessert und die Betriebssicherheit erhöht. Weiter soll insbesondere ein kritischer Betriebszustand durch eine zu hohe Betriebstemperatur vermieden werden, und vorzugsweise gleichzeitig eine ausreichende elektrische Isolation und/oder ein ausreichender Berührungsschutz der Batteriezellen gewährleistet werden.

Die voranstehende Aufgabe wird gelöst durch eine Gehäuseanordnung mit den Merkmalen des Anspruchs 1, durch ein Batteriesystem mit den Merkmalen des Anspruchs 14, durch ein Lüftungssystem mit den Merkmalen des Anspruchs 15, sowie durch ein Verfahren mit den Merkmalen des Anspruchs 19. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Gehäuseanordnung beschrieben sind, selbstverständlich auch im Zusammenhang mit dem erfindungsgemäßen Batteriesystem sowie dem erfindungsgemäßen Lüftungssystem und dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch eine Gehäuseanordnung für zumindest eine Batteriezelle, vorzugsweise eine Lithium-Batterie-Zelle und/oder eine Lithium-Pouch-Zelle, und/oder für ein Batteriemodul. Der Begriff "Batterie" bezieht sich dabei auch auf einen Akkumulator, das heißt eine wiederaufladbare Batterie. Hierbei ist vorgesehen, dass die Gehäuseanordnung zumindest ein Rahmenelement umfasst, welches eine Wandung und einen durch die Wandung gebildeten Innenraum zur Aufnahme und/oder Lagerung der zumindest einen Batteriezelle (und/oder des Batteriemoduls mit mehreren Batteriezellen) aufweist, wobei an der Wandung mehrere Lüftungsausnehmungen vorgesehen sind, wobei die Lüftungsausnehmungen eine derartig, insbesondere in Breitenrichtung des Rahmenelements, wechselnde Ausrichtung aufweisen, dass der Eintritt eines Fluides durch die Lüftungsausnehmungen, insbesondere vom Außenbereich in den Innenraum, wechselseitig erfolgen kann. Die Lüftungsausnehmung sind dabei vorzugsweise Materialausnehmungen der Wandung, welche zum Beispiel einseitig am Rahmenelement angeordnet sind. Hierdurch wird der Vorteil erzielt, dass die Gehäuseanordnung eine ausreichende Kühlung und/oder Heizung der Batteriezellen ermöglicht. Dadurch kann gewährleistet werden, dass die Batteriezellen in dem für sie spezifischen Temperaturbereich betrieben werden. Insbesondere kann auch eine gleichmäßig an den Batteriezellen verteilte Betriebstemperatur gewährleistet werden, um eine ungleichmäßige Alterung der Batteriezellen zu vermeiden. Die Gehäuseanordnung ermöglicht ferner eine Erhöhung der mechanischen Stabilität für die Batteriezelle und/oder für Batteriemodule und/oder für das Batteriesystem. Ferner kann eine ausreichende elektrische Isolation und ein ausreichender Berührungsschutz für die Batteriezellen und für andere spannungsführende Teile des Batteriesystems gewährleistet werden.

Es kann bevorzugt vorgesehen sein, dass die Gehäuseanordnung zumindest 2 oder zumindest 3 oder zumindest 4 oder zumindest 10 oder zumindest 20 oder zumindest 30 Rahmenelemente umfasst, welche insbesondere miteinander verbunden sind, und somit einen Gesamtrahmen bilden. Die Wandungen der jeweiligen Rahmenelemente bilden somit insbesondere eine Gesamtwandung, welche den Innenraum zur Aufnahme der Batteriezellen und/oder Batteriemodule bildet. Die einzelnen Rahmenelemente sind bevorzugt (im Wesentlichen) identisch ausgebildet, und lassen sich besonders bevorzugt derart miteinander verbinden oder anordnen, dass sich zwischen benachbarten Wandungen der Rahmenelemente im Bereich der Lüftungsausnehmungen zumindest eine Spaltöffnung und/oder zumindest ein Spalt bildet. Da die gebildeten Spalte aus den Lüftungsausnehmungen benachbarter Rahmenelemente gebildet sind, weisen die gebildeten Spalte eine derartig wechselnde Ausrichtung auf, dass der Eintritt des Fluids durch die Spaltenöffnung wechselseitig, insbesondere in den Innenraum, erfolgen kann. Hierdurch kann eine gleichmäßige und insbesondere beidseitige Kühlung der Batteriezellen im Innenraum gewährleistet werden.

Vorzugsweise kann vorgesehen sein, dass die Wandung eine Außenwandung und eine Innenwandung aufweist, wobei im Bereich der Lüftungsausnehmungen zwischen der Außenwandung und der Innenwandung eine derartig ausgebildete Lüftungsgeometrie vorgesehen ist, dass zumindest ein Zwischenraum durch die Außenwandung und die Innenwandung gebildet ist, wobei insbesondere der Zwischenraum die Lüftungsausnehmung bzw. eine Lüftungsöffnung bildet. Die Außenwandung ist insbesondere eine dem Außenbereich der Batteriezelle zugewandte Wandung und die Innenwandung ist bevorzugt eine dem Innenraum zugewandte Wandung, wobei die Außenwandung besonders bevorzugt gegenüberliegend und/oder im Wesentlichen parallel zur Innenwandung beabstandet angeordnet ist. Der Abstand zwischen der Außenwandung und der Innenwandung beträgt vorzugsweise zwischen 1 mm und 100 mm, besonders bevorzugt zwischen 5 mm und 50 mm, vorzugsweise zwischen 10 mm und 20 mm. Zwischen der Innenwandung und der Außenwandung sind vorzugsweise Wandungselemente, insbesondere Wandungsmittel, angeordnet, welche bevorzugt materialeinheitlich und/oder einstückig mit der Außenwandung und/oder der Innenwandung ausgeführt sind. Weiter können insbesondere auch die Außenwandung und die Innenwandung einstückig und/oder monolithisch und/oder fluiddicht beziehungsweise fluidundurchlässig ausgebildet sein. Das Fluid ist beispielsweise ein Gas, insbesondere Luft. Damit das Fluid von dem Außenbereich der Batteriezelle und/oder der Gehäuseanordnung in den Innenraum zur Heizung oder Kühlung der Batteriezelle gelangen kann, ist der Zwischenraum vorzugsweise fluiddurchlässig, das heißt insbesondere vollständig materialfrei ausgebildet. Bei einem einzigen Rahmenelement kann der Zwischenraum bevorzugt nur einseitig die Wandung aufweisen und insbesondere auf der gegenüberliegenden Seite frei ausgebildet sein, das heißt an der Außenseite des Rahmenelements beziehungsweise der Wandung ausgebildet sein. In diesem Fall ist es vorgesehen, dass erst bei einer Anordnung des Rahmenelements an einem weiteren Rahmenelement der Zwischenraum auch auf dieser gegenüberliegenden Seite von der Wandung des weiteren Rahmenelements teilweise umschlossen wird und somit der Zwischenraum eine offene Kavität bzw. Öffnung bildet. Somit wird ein zuverlässiger Eintritt des Fluids in den Innenraum gewährleistet.

Ferner ist es optional vorgesehen, dass die Lüftungsgeometrie zumindest zwei fluiddichte Wandungsmittel und/oder zumindest eine Zwischenwandung aufweist, welche insbesondere labyrinthartig angeordnet sind, um vorzugsweise Nebenkammern im Zwischenraum auszubilden. Die Wandungsmittel und/oder die Zwischenwandung und/oder die Nebenkammern sind dabei bevorzugt durch die Lüftungsgeometrie gebildet. Die Lüftungsgeometrie und/oder die Wandungsmittel und/oder die Zwischenwandung haben dabei insbesondere den Zweck, einen Strömungswiderstand für das eintretende Fluid zu bilden. Die Nebenkammern werden beispielsweise zwischen den Wandungsmitteln und der Zwischenwandung gebildet. Damit wird der Vorteil erzielt, dass insbesondere der statische Druck erhöht werden kann und/oder das Verhältnis zwischen statischen Druck und dynamischen Druck erhöht werden kann, um auf Systemebene eine Gleichverteilung zu erzwingen und/oder eine gleichmäßige Verteilung des Fluids zur Kühlung und/oder Heizung zu gewährleisten. Der Zwischenraum und/oder die Nebenkammern und/oder die Zwischenwandung und/oder die Lüftungsgeometrie mit den Nebenkammern bewirkt vorzugsweise auch, dass ausreichend Luft- und/oder Kriechstrecken gebildet werden, um trotz der Lüftungsöffnungen im Rahmenelement eine ausreichende elektrische Isolation (bzw. Isolationsfestigkeit) zu gewährleisten. Hierzu ist es insbesondere vorgesehen, dass eine Luftstrecke von mindestens 5 mm bis 20 mm, vorzugsweise 10 mm bis 12 mm, besonders bevorzugt 11 mm, durch die Lüftungsgeometrie erzielt wird. Weiter ist es insbesondere vorgesehen, dass eine Kriechstrecke bis zur Batteriezelle von mindestens 15 mm bis 30 mm, vorzugsweise 18 mm bis 22 mm, besonders bevorzugt 20 mm, durch die Lüftungsgeometrie erzielt wird. Dieses wird besonders bevorzugt durch die Zwischenwandung erreicht.

Des Weiteren ist es denkbar, dass das Rahmenelement aus einem Kunststoff ausgebildet ist, und insbesondere ein Spritzgussteil ist. Das Rahmenelement kann dabei beispielsweise elektrisch isolierend ausgeführt sein. Dies hat den Vorteil, dass insbesondere bei Hochspannungsbatteriesystemen ein ausreichender Berührungsschutz der Batteriezellen gewährleistet wird.

Außerdem ist es von Vorteil, wenn der Innenraum eine maximale Breite im Bereich von 50 mm bis 550 mm, vorzugsweise 150 mm bis 350 mm, bevorzugt 200 mm bis 220 mm, und/oder eine maximale Höhe im Bereich von 5 mm bis 15 mm, vorzugsweise 10 mm bis 12 mm aufweist. Die Breite erstreckt sich dabei vorzugsweise in einer Breitenrichtung des Rahmenelements und die Höhe in einer Höhenrichtung des Rahmenelements orthogonal zur Breite. Ferner ist es denkbar, dass die maximale Breite des Innenraums variabel ausgeführt ist, beispielsweise durch eine bewegliche Anordnung der Wandungen. Dies hat den Vorteil, dass eine Vielzahl verschiedener Batteriezellen eingesetzt werden kann.

Ferner kann im Rahmen der Erfindung vorgesehen sein, dass an der Wandung zumindest eine Luftaustrittsöffnung vorgesehen ist, insbesondere auf einer der Lüftungsausnehmungen gegenüberliegenden Seite der Wandung, wobei die Luftaustrittsöffnung eine Luftaustrittsgeometrie aufweist, insbesondere mit mindestens zwei und/oder mindestens drei und/oder mindestens vier parallel angeordneten und gleich ausgerichteten Luftaustrittswandungen, um das durch die Lüftungsausnehmungen, insbesondere Lufteintrittsausnehmungen, in den Innenraum eingetretene Fluid aus dem Innenraum, bevorzugt entsprechend der Ausrichtung der Luftaustrittswandungen, zu führen und/oder um einen Berührungsschutz zur Batteriezelle zu bieten. Hierbei ist es weiter denkbar, dass an einer linksseitigen Wandung des Rahmenelements eine linksseitige Luftaustrittsöffnung vorgesehen ist, und das Fluid entsprechend der Ausrichtung der linksseitigen Luftaustrittsöffnung nach links (linksseitig) abgelenkt wird. Weiter kann an der rechtsseitigen Wandung des Rahmenelements eine rechtsseitige Luftaustrittsöffnung vorgesehen sein, wobei an der rechtsseitigen Luftaustrittsöffnung das Fluid entsprechend der Ausrichtung der rechtsseitigen Luftaustrittsöffnung nach rechts (rechtsseitig) abgelenkt wird. Der Begriff "Luftaustrittsöffnung" bezieht sich selbstverständlich auch auf Öffnungen, welche den Austritt eines beliebigen Fluids ermöglichen. Die Luftaustrittsöffnungen ermöglichen eine zuverlässige Kühlung und/oder Heizung der Batteriezellen und/oder einen Berührungsschutz zur Isolation der Batteriezelle.

Es kann von Vorteil sein, wenn im Rahmen der Erfindung durch die Lüftungsausnehmungen des (ersten) Rahmenelements komplementär mit den Lüftungsausnehmungen eines benachbarten weiteren Rahmenelements ein Spalt mit einer Spaltöffnung bildbar ist, wobei vorzugsweise die Spaltöffnung eine maximale Erstreckung von 1 mm bis 50 mm, bevorzugt 5 mm bis 20 mm, besonders bevorzugt 8 mm bis 10 mm aufweist. Die Ausbildung des Spalts wird insbesondere dadurch bewirkt, dass die Erstreckung / Breite der Wandung im Bereich der Lüftungsausnehmungen geringer ist als eine maximale Erstreckung / Breite der Wandung. Die wechselseitige Ausrichtung der Lüftungsausnehmungen bewirkt dabei ebenfalls eine wechselseitige Ausrichtung der Spalte. Die wechselseitige Ausrichtung der Spalte kann sich dabei bevorzugt in einer Breitenrichtung der Wandung abwechseln und/oder in einer Längsrichtung abwechseln. Dies ermöglicht eine gleichmäßige und vorzugsweise beidseitige Beströmung der Batteriezellen durch das Fluid. Die Breitenrichtung bezieht sich dabei vorzugsweise auf eine Richtung, welche orthogonal zur Höhenrichtung und/oder zur Anordnungsrichtung der Rahmenelemente ist. Die Längsrichtung entspricht zum Beispiel der Anordnungsrichtung der Rahmenelemente. Die Höhenrichtung entspricht zum Beispiel einer Richtung, in welcher im Wesentlichen das Fluid entlang der Batteriezelle im Innenraum strömt. Unter Anordnungsrichtung wird die Richtung verstanden, in welche eine modulare Anordnung oder Aneinanderreihung weiterer Rahmenelemente erfolgt.

Von weiterem Vorteil kann vorgesehen sein, dass die Lüftungsausnehmungen derart angeordnet und/oder ausgerichtet sind, dass durch die Lüftungsausnehmungen, insbesondere durch die Verbindung des Rahmenelements an ein weiteres Rahmenelement, ein außenseitiger Spalt im Bereich der Außenwandung und ein innenseitiger Spalt im Bereich der Innenwandung ausbildbar ist, wobei insbesondere der außenseitige Spalt versetzt (insbesondere in Breitenrichtung versetzt bzw. lateral versetzt relativ zur Strömungsrichtung des durch den Spalt strömenden Fluides) vom innenseitigen Spalt angeordnet ist. Durch die Versetzung wird insbesondere bewirkt, dass die Strömung durch den Zwischenraum zwischen dem außenseitigen Spalt und dem innenseitigen Spalt (Strömungsrichtung) schräg erfolgt. Insbesondere bezieht sich dabei die wechselnde Ausrichtung der Lüftungsausnehmungen und/oder der Spalte darauf, dass sich diese Lüftungsrichtung durch den Zwischenraum für benachbarte Lüftungsausnehmungen oder Spalte abwechselt und/oder die Versetzung bei benachbarten Spalten und/oder Lüftungsausnehmungen spiegelverkehrt erfolgt. Es wird somit der Vorteil erzielt, dass der Strömungswiderstand erhöht wird und somit eine gleichmäßige Strömung erzielt werden kann.

Bevorzugt kann im Rahmen der Erfindung vorgesehen sein, dass die Batteriezelle im Innenraum zwischen zwei benachbart angeordneten Rahmenelementen lagerbar und/oder befestigbar ist, wobei insbesondere die Lüftungsausnehmungen derart angeordnet und/oder wechselseitig ausgerichtet sind, dass die Oberfläche der Batteriezelle beidseitig, insbesondere abwechselnd vorder- und rückseitig, durch ein durch die Lüftungsausnehmungen strömendes Fluid anströmbar ist. Der Begriff "beidseitig" betrifft dabei insbesondere die beiden Außenseiten der Batteriezelle, welche jeweils die größte Oberfläche der Batteriezelle aufweisen. Hiervon wird vorzugsweise eine Seite als Vorderseite und die gegenüberliegende Seite als Rückseite bezeichnet. Die beidseitige Beströmung der Batteriezelle mit dem Fluid erfolgt dabei insbesondere für sämtliche Batteriezellen des Batteriemoduls und/oder des Batteriesystems aufgrund der gleichen Ausgestaltung der verschiedenen Rahmenelemente in gleicher Weise, sodass einer ungleichmäßigen Alterung zwischen den Batteriezellen entgegengewirkt werden kann.

Ferner kann es im Rahmen der Erfindung vorgesehen sein, dass die Wandung eine maximale Wandstärke im Bereich von 1 cm bis 10 cm, vorzugsweise 2 cm bis 5 cm, bevorzugt 3 cm bis 4 cm aufweist. Somit kann eine ausreichende Isolation und ein ausreichender Berührungsschutz sowie eine ausreichende mechanische Stabilität gewährleistet werden.

Zudem ist im Rahmen der Erfindung denkbar, dass das Rahmenelement elektrisch isolierend ausgestaltet ist, und insbesondere ein elektrisch isolierendes und/oder fluiddichtes Polymer aufweist. Hierdurch wird eine ausreichende Isolation insbesondere für Hochspannungsanwendungen erzielt.

Beispielsweise kann es vorgesehen sein, dass zumindest ein Verbindungselement vorgesehen ist, um das Rahmenelement mit weiteren Rahmenelementen zu verbinden. Das Verbindungselement kann dabei beispielsweise dazu geeignet sein, ein Verbindungsmittel und/oder ein Befestigungsmittel aufzunehmen, um die Rahmenelemente kraft- und/oder formflüssig miteinander zu verbinden. Das Verbindungselement ist dazu zum Beispiel als Aufnahme für das Verbindungsmittel und/oder das Befestigungsmittel ausgebildet. Somit wird eine ausreichende Stabilität und eine modulare Erweiterbarkeit der Gehäuseanordnung erzielt.

In einer weiteren Möglichkeit kann vorgesehen sein, dass das Rahmenelement und/oder zumindest ein Verbindungselement derart ausgestaltet ist, dass das Rahmenelement mit weiteren Rahmenelementen modular verbindbar ist. Dies wird insbesondere dadurch erzielt, dass die Rahmenelemente im Wesentlichen gleich oder identisch ausgebildet sind und komplementär, das heißt insbesondere durch die wechselseitige Ausrichtung der Lüftungsausnehmungen, derart miteinander verbunden werden können, dass gleichmäßig verteilt entlang des Innenraums Spalte für den Fluideintritt entstehen. Hierdurch wird der Vorteil erzielt, dass zum Beispiel mindestens 20 und/oder zumindest 30 und/oder zumindest 36 Batteriezellen modular durch die Gehäuseanordnung aufgenommen werden können.

Ebenfalls Gegenstand der Erfindung ist ein Batteriesystem, aufweisend zumindest eine Batteriezelle und/oder ein Batteriemodul, insbesondere mit einer erfindungsgemäßen Gehäuseanordnung. Hierbei ist vorgesehen, dass die Batteriezelle in einem Innenraum gelagert ist, und der Innenraum durch eine Wandung von zumindest einem Rahmenelement, und insbesondere auch durch die Wandung eines benachbart dazu angeordneten weiteren Rahmenelements, gebildet ist. Insbesondere können an der Wandung mehrere Lüftungsausnehmungen vorgesehen sein, wobei die Lüftungsausnehmungen eine derartig wechselnde Ausrichtung aufweisen, dass der Eintritt eines Fluids durch die Lüftungsausnehmungen, insbesondere in den Innenraum, wechselseitig erfolgen kann. Damit bringt das erfindungsgemäße Batteriesystem die gleichen Vorteile mit sich, wie sie ausführlich mit Bezug auf eine erfindungsgemäße Gehäuseanordnung beschrieben sind. Das Batteriesystem kann dabei beispielsweise als Hochspannungsbatteriesystem für Hochspannungsanwendungen ausgebildet sein. Das Batteriesystem umfasst dabei beispielsweise mehrere Batteriemodule (wobei insbesondere jedes Batteriemodul jeweils eine erfindungsgemäße Gehäuseanordnung mit mehreren Rahmenelementen aufweist), wobei jedes Batteriemodul vorzugsweise mehrere Batteriezellen umfasst.

Ebenfalls Gegenstand der Erfindung ist ein Lüftungssystem, insbesondere zum Kühlen und/oder Heizen eines Batteriesystems mit mindestens einer Batteriezelle, insbesondere eines erfindungsgemäßen Batteriesystems. Hierbei ist insbesondere vorgesehen, dass das Lüftungssystem mindestens ein Gebläse und zumindest einen Kanal umfasst, wobei mit dem Gebläse ein Fluid durch den Kanal zu mindestens zwei Lüftungsausnehmungen einer Gehäuseanordnung, insbesondere einer erfindungsgemäßen Gehäuseanordnung, förderbar ist. Dabei ist vorzugsweise vorgesehen, dass die Gehäuseanordnung zumindest ein Rahmenelement umfasst, welches eine Wandung und einen durch die Wandung gebildeten Innenraum zur Aufnahme der Batteriezelle aufweist, wobei an der Wandung die Lüftungsausnehmungen vorgesehen sind, wobei die Lüftungsausnehmungen eine derartig wechselnde Ausrichtung aufweisen, dass der Eintritt des Fluids durch die Lüftungsausnehmungen wechselseitig erfolgen kann. Damit bringt das erfindungsgemäße Lüftungssystem die gleichen Vorteile mit sich, wie sie ausführlich mit Bezug auf ein erfindungsgemäßes Batteriesystem und/oder eine erfindungsgemäße Gehäuseanordnung erläutert worden sind.

Außerdem kann es im Rahmen der Erfindung von Vorteil sein, dass die Lüftungsausnehmungen, insbesondere Lufteintrittsausnehmungen, und/oder zumindest eine Luftaustrittsöffnung (an der Wandung) derart ausgeführt sind, dass bei aktiviertem Gebläse ein durchschnittlicher (und/oder maximaler und/oder mindester) statischer Druck auftritt, welcher mindestens dem 2-fachen oder 2,5-fachen oder 5-fachen des maximalen und/oder durchschnittlichen (und/oder mindesten) dynamischen Drucks entspricht. Um zu gewährleisten, dass alle Batteriezellen des Batteriesystems stets bei möglichst gleicher Temperatur betrieben werden, ist es insbesondere entscheidend, dass sämtliche Batteriezellen mit im Wesentlichen derselben Menge des Fluids bei im Wesentlichen gleicher Temperatur angeströmt werden. Die gleichmäßige Luftverteilung kann vorzugsweise dadurch erzielt werden, dass das Gebläse als zentrales Gebläse insbesondere zur Zwangsförderung des Fluids vorgesehen ist, um die Batteriezellen mit einer Fluidströmung gleichmäßig zu versorgen.

In einer weiteren Möglichkeit kann vorgesehen sein, dass das Gebläse mit einem Wärmetauscher verbunden ist, um das Fluid zu kühlen und/oder zu erwärmen. Der Wärmetauscher kann dabei vorzugsweise als Luft-Wasser-Wärmetauscher ausgebildet sein und insbesondere an ein externes Klimaaggregat angeschlossen sein, um die Luft entsprechend einer Vorgabe zu temperieren. Der Wärmetauscher und/oder das Klimaaggregat kann dabei vorzugsweise in Abhängigkeit von gemessenen Temperaturwerten angesteuert werden, um eine zuverlässige Einstellung des spezifischen Temperaturbereichs für die Batteriezellen zu ermöglichen. Hierzu können für die Temperaturmessung zum Beispiel Messsensoren an der Gehäuseanordnung vorgesehen sein.

Es kann weiter möglich sein, dass der Kanal und/oder ein Rückströmkanal einen Durchmesser aufweist, welcher mindestens dem 2-fachen oder mindestens 4-fachen oder mindestens 6-fachen des maximalen Durchmessers der Lüftungsausnehmungen entspricht, wobei insbesondere der Rückströmkanal zur Aufnahme des Fluids mit der Wandung im Bereich von zumindest einer Luftaustrittsöffnung der Gehäuseanordnung verbunden ist. Dabei wird insbesondere durch das Gebläse bewirkt, dass im gesamten Kanal ein annähernd identischer statischer Überdruck anliegt, wodurch im Wesentlichen sämtliche Batteriemodule und/oder sämtliche Batteriezellen über die Spalte mit im Wesentlichen gleich viel Luft beziehungsweise mit im Wesentlichen der gleichen Fluidmenge versorgt werden. Das Fluid durchströmt dabei die Batteriemodule und/oder die Batteriezellen und/oder die Innenräume, und heizt beziehungsweise kühlt dabei insbesondere die Batteriezellen. Anschließend kann das Fluid insbesondere über die Luftaustrittsöffnungen in einen Rückstromkanal gelangen, welcher das Fluid zurück zum Gebläse und/oder zum Wärmetauscher leitet. Hierdurch wird eine zuverlässige Kühlung des Batteriesystems und/oder der Batteriemodule erzielt.

Ebenfalls unter Schutz gestellt ist ein Verfahren zum Kühlen und/oder Heizen eines Batteriesystems, insbesondere eines erfindungsgemäßen Batteriesystems, und/oder zumindest einer Batteriezelle, wobei eine Gehäuseanordnung, insbesondere eine erfindungsgemäße Gehäuseanordnung, vorgesehen ist, und die Gehäuseanordnung zumindest ein Rahmenelement umfasst, welches eine Wandung und einen durch die Wandung gebildeten Innenraum zur Aufnahme der Batteriezelle aufweist, wobei an der Wandung mehrere Lüftungsausnehmungen vorgesehen sind, wobei die Lüftungsausnehmungen eine derartig wechselnde Ausrichtung aufweisen, dass der Eintritt eines Fluids durch die Lüftungsausnehmungen wechselseitig erfolgt. Vorteilhafterweise kann weiter ein erfindungsgemäßes Lüftungssystem für das Verfahren zum Einsatz kommen. Damit bringt das erfindungsgemäße Verfahren die gleichen Vorteile mit sich, wie sie ausführlich mit Bezug auf ein erfindungsgemäßes Batteriesystem und/oder eine erfindungsgemäße Gehäuseanordnung und/oder ein erfindungsgemäßes Lüftungssystem erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
Es zeigen:
- Fig. 1: eine schematische Darstellung einer erfindungsgemäßen Gehäuseanordnung,
- Fig. 2: eine schematische Schnittansicht durch eine erfindungsgemäße Gehäuseanordnung,
- Fig. 3: eine schematische Ansicht eines erfindungsgemäßen Batteriesystems und eines erfindungsgemäßen Lüftungssystems,
- Fign. 4, 5: eine schematische perspektivische Ansicht auf eine erfindungsgemäße Gehäuseanordnung,
- Fign. 6, 7: eine schematische Ansicht auf eine Unterseite einer erfindungsgemäßen Gehäuseanordnung,
- Fig. 8: eine schematische vergrößerte Ansicht von Teilen einer erfindungsgemäßen Gehäuseanordnung.

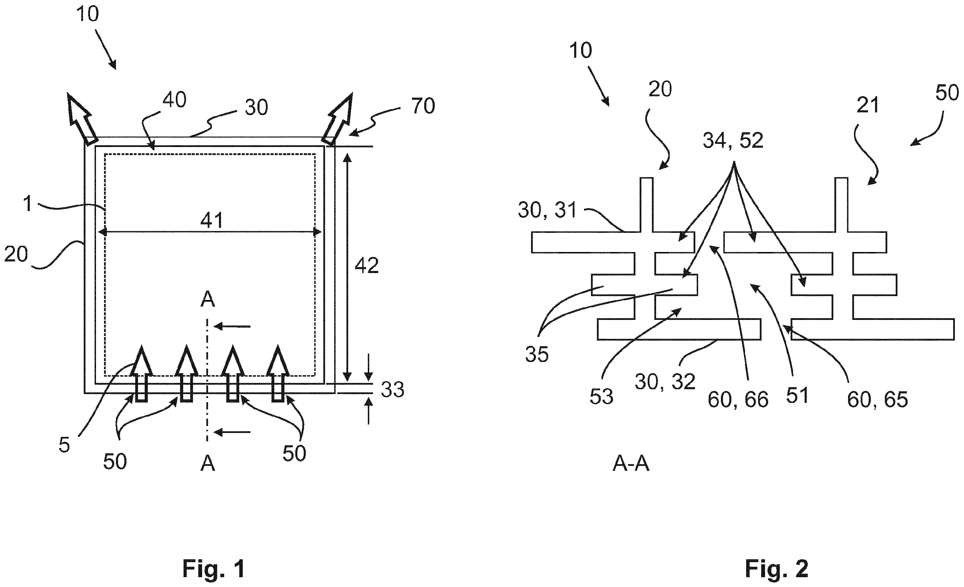

In Fig. 1 ist schematisch eine Seitenansicht auf eine erfindungsgemäße Gehäuseanordnung 10 gezeigt. Dabei ist ein Rahmenelement 20 in der Seitenansicht dargestellt, dessen Wandung 30 einen Innenraum 40 bildet. In diesem Innenraum 40 kann eine Batteriezelle 1 und/oder ein Batteriemodul 1 bestehend aus mehreren Batteriezellen 1 angeordnet werden. Dies ist durch eine gestrichelte Linie dargestellt. Weiter ist erkennbar, dass das Rahmenelement 20 der Gehäuseanordnung 10 insbesondere im Wesentlichen orthogonal zur Strömungsrichtung des Fluids 5 im Bereich der Lüftungsausnehmungen 50 eine Breitenrichtung beziehungsweise Breite 41 aufweist. Die Höhe 42 erstreckt sich dagegen orthogonal zur Breite 41 und im Wesentlichen parallel zur Strömungsrichtung im Bereich der Lüftungsausnehmungen 50. Die Strömungsrichtung eines eintretenden Fluids 5 sowie eines austretenden Fluids 5 ist dabei durch Pfeile schematisch dargestellt. Weiter ist eine Wandstärke 33 der Wandung 30 gekennzeichnet, welche insbesondere den Abstand zwischen einer Innenwandung 31 und einer Außenwandung 32 angibt.

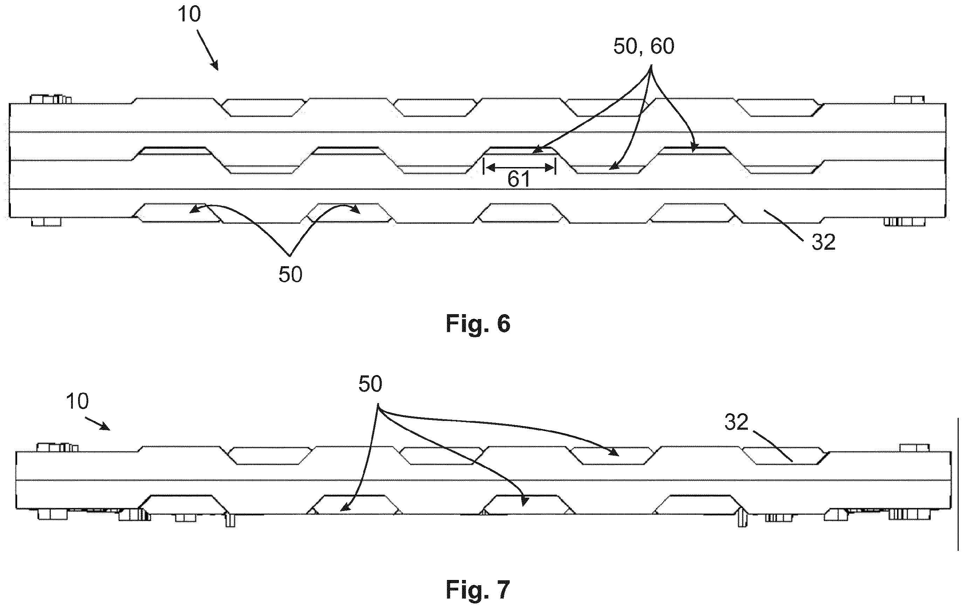

Fig. 2 zeigt schematisch eine Schnittansicht durch die in Fig. 1 gekennzeichnete Ebene A-A. Dabei ist die Innenwandung 31 und die Außenwandung 32 der Wandung 30 gezeigt, wobei die Innenwandung 31 unmittelbar am Innenraum 40 angrenzt. Die linke Wandung 30 wird dabei durch das, insbesondere ein erstes, Rahmenelement 20 und die rechte Wandung 30 durch ein weiteres (vom ersten Rahmenelement 20 separat ausgebildeten) Rahmenelement 21 gebildet. Die Wandungen 30 des ersten Rahmenelements 20 und des weiteren Rahmenelements 21 sind vorzugsweise jeweils separat voneinander ausgebildet. Aufgrund der Lüftungsausnehmung 50 bildet sich dabei ein Spalt 60 zwischen der Wandung 30 des ersten Rahmenelements 20 und der Wandung 30 des weiteren Rahmenelements 21. Der Spalt 60 weist eine maximale Erstreckung 61 auf, welche in Fig. 6 dargestellt ist. Weiter umfasst der Spalt 60 einen ersten, außenseitigen Spalt 65 und einen zweiten, innenseitigen Spalt 66. Der Bereich zwischen dem außenseitigen Spalt 65 und dem innenseitigen Spalt 66 bildet einen Zwischenraum 51. Im Bereich des Zwischenraums 51 ist weiter eine Lüftungsgeometrie 52 ausgebildet, um vorzugsweise einen Strömungswiderstand zu bilden. Die Lüftungsgeometrie 52 umfasst beispielsweise Wandungsmittel 34 und/oder zumindest eine Zwischenwandung 35, wobei sich zwischen den Wandungsmitteln 34 und der Zwischenwandung 35 zumindest eine Nebenkammer 53 ausbildet.

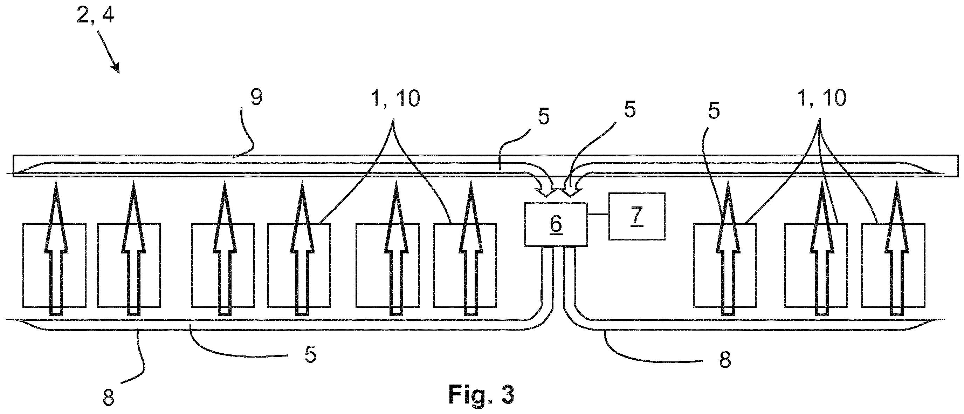

In Fig. 3 ist schematisch ein erfindungsgemäßes Batteriesystem 2 und ein erfindungsgemäßes Lüftungssystem 4 gezeigt. Das Batteriesystem 2 umfasst dabei zumindest eine Batteriezelle 1 und/oder zumindest ein Batteriemodul 1. Das Lüftungssystem 4 umfasst mindestens ein Gebläse 6, welches insbesondere an einem Wärmetauscher 7 zur Kühlung und/oder Heizung des Fluids 5 angeschlossen ist. Durch das Gebläse 6 wird dabei das Fluid 5 durch einen Kanal 8 geleitet, welcher derart ausreichend groß dimensioniert ist, dass ein statischer Druck größer als ein dynamischer Druck und/oder eine gleichmäßige Luftverteilung und/oder ein gleichmäßiger statischer Überdruck auf die Batteriezellen 1 und/oder die Batteriemodule 1 wirken kann. Weiter sind auch die entsprechend den Kanälen 8 ausreichend dimensionierten Rückstromkanäle 9 dargestellt, welche das Fluid 5 wieder zurück zum Gebläse 6 leiten.

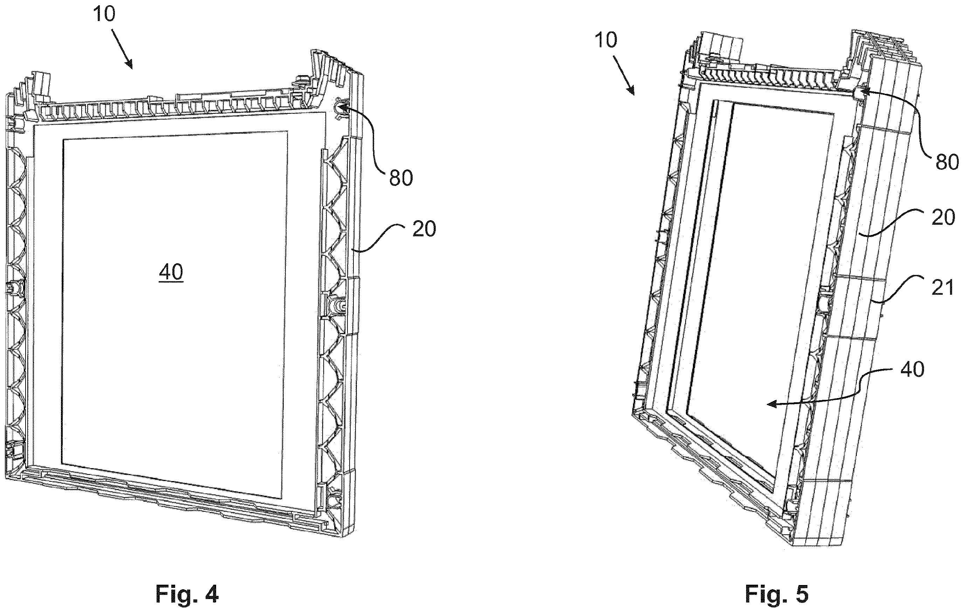

In den Fign. 4 und 5 ist perspektivisch die erfindungsgemäße Gehäuseanordnung 10 gezeigt. Dabei ist in Fig. 4 nur ein Rahmenelement 20 und in Fig. 5 ein (erstes) Rahmenelement 20 und ein weiteres Rahmenelement 21 dargestellt, welche miteinander verbunden sind. Zwischen dem ersten Rahmenelement 20 und dem weiteren Rahmenelement 21 kann in dem Zwischenraum 51 eine Batteriezelle 1 und/oder ein Batteriemodul 1 eingebracht und/oder eingeklemmt werden. Weiter ist ein Verbindungselement 80 gezeigt, welches als Aufnahme für ein Befestigungsmittel ausgebildet ist.

In den Fign. 6 und 7 ist eine Unterseite der Gehäuseanordnung 10 gezeigt. Dabei ist die wechselnde Ausrichtung der Lüftungsausnehmungen 50 beziehungsweise der Spalte 60, insbesondere in Breitenrichtung, erkennbar. Weiter ist erkennbar, dass zumindest zwei Rahmenelemente 20, 21 miteinander verbunden werden müssen, um einen Spalt 60 für den Eintritt des Fluids 5 zu bilden.

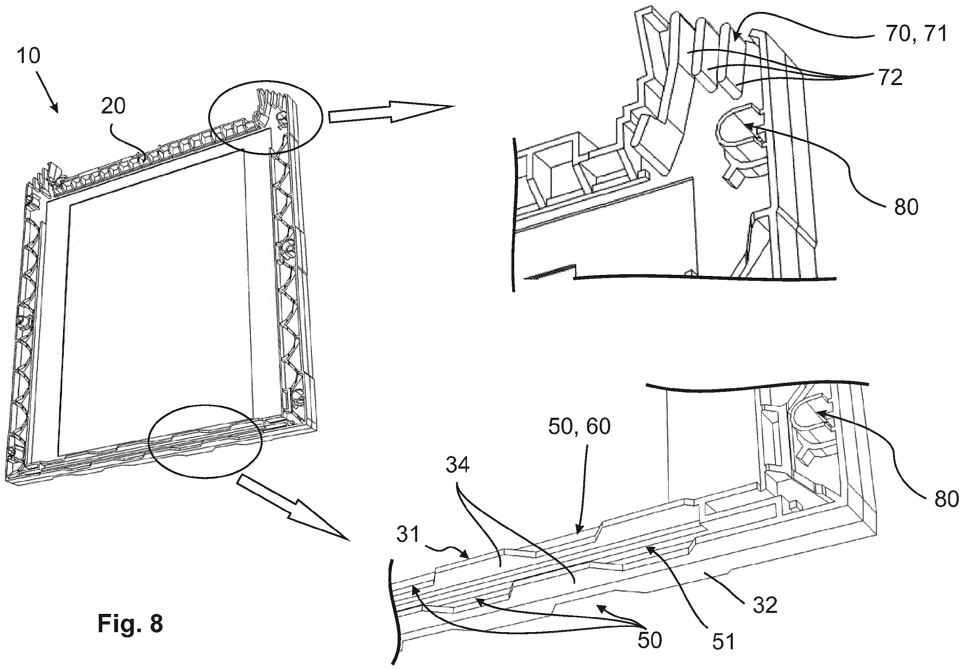

Fig. 8 zeigt in einer vergrößerten Ansicht die Lüftungsausnehmungen 50 sowie eine Luftaustrittsöffnung 70. Die Luftaustrittsöffnung 70 weist eine Luftaustrittsgeometrie 71 auf, welche zumindest eine Luftaustrittswandung 72 umfasst. Die Luftaustrittswandungen 72 sind dabei gegebenenfalls derart angeordnet, dass das Austreten des Fluid 5 gezielt in eine definierte Richtung umgelenkt werden kann und/oder dass ein Berührungsschutz zur Batteriezelle 1 erzielt wird. Die Luftaustrittsöffnungen 70 sind dabei im gezeigten Ausführungsbeispiel auf einer der Lüftungsausnehmungen 50 gegenüberliegenden Seite des Rahmenelements 20 angeordnet, wobei sich insbesondere in Breitenrichtung zumindest zwei Luftaustrittsöffnungen 70 an einem Rahmenelement 20 gegenüberliegen. Die jeweiligen Luftaustrittsöffnungen 70 sind dabei vorzugsweise außenseitig am Rahmenelement 20 links- und rechtsseitig angeordnet.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezuaszeichenliste

- 1: Batteriezelle, Batteriemodul
- 2: Batteriesystem
- 4: Lüftungssystem
- 5: Fluid, Strömung
- 6: Gebläse
- 7: Wärmetauscher
- 8: Kanal
- 9: Rückströmkanal

- 10: Gehäuseanordnung
- 20: Rahmenelement
- 21: weitere Rahmenelemente

- 30: Wandung
- 31: Innenwandung
- 32: Außenwandung
- 33: Wandstärke
- 34: Wandungsmittel
- 35: Zwischenwandung
- 40: Innenraum
- 41: Breite
- 42: Höhe
- 50: Lüftungsausnehmungen, Lufteintrittsausnehmungen
- 51: Zwischenraum
- 52: Lüftungsgeometrie
- 53: Nebenkammern

- 60: Spalt
- 61: maximale Erstreckung
- 65: außenseitigen Spalt
- 66: innenseitigen Spalt

- 70: Luftaustrittsöffnung
- 71: Luftaustrittsgeometrie
- 72: Luftaustrittswandungen
- 80: Verbindungselement

## Patentansprüche

1. Gehäuseanordnung (10) für zumindest eine Batteriezelle (1), vorzugsweise eine Lithium-Batterie-Zelle (1) und/oder eine Lithium-Pouch-Zelle (1), wobei die Gehäuseanordnung (10) zumindest ein Rahmenelement (20) umfasst, welches eine Wandung (30) und einen durch die Wandung (30) gebildeten Innenraum (40) zur Aufnahme der Batteriezelle (1) aufweist, wobei an der Wandung (30) mehrere Lüftungsausnehmungen (50) vorgesehen sind, wobei die Lüftungsausnehmungen (50) eine derartig wechselnde Ausrichtung aufweisen, dass der Eintritt eines Fluids (5) durch die Lüftungsausnehmungen (50) wechselseitig erfolgen kann.

2. Gehäuseanordnung (10) nach Anspruch 1,
**dadurch gekennzeichnet,**
**dass** die Wandung (30) eine Außenwandung (32) und eine Innenwandung (31) aufweist, wobei im Bereich der Lüftungsausnehmungen (50) zwischen der Außenwandung (32) und der Innenwandung (31) eine derartig ausgebildete Lüftungsgeometrie (52) vorgesehen ist, dass ein Zwischenraum (51) durch die Außenwandung (32) und die Innenwandung (31) gebildet ist, wobei insbesondere der Zwischenraum (51) die Lüftungsausnehmung (50) bildet, und/oder das Rahmenelement (20) aus einem Kunststoff ausgebildet ist, und insbesondere ein Spritzgussteil ist.

3. Gehäuseanordnung (10) nach Anspruch 1 oder 2,
**dadurch gekennzeichnet,**
**dass** die Lüftungsgeometrie (52) zumindest zwei fluiddichte Wandungsmittel (34) und/oder zumindest eine Zwischenwandung (35) aufweist, welche insbesondere labyrinth-artig angeordnet sind, um vorzugsweise Nebenkammern (53) im Zwischenraum (51) auszubilden.

4. Gehäuseanordnung (10) nach einem der vorhergehenden Ansprüche,
**dadurch gekennzeichnet,**
**dass** der Innenraum (40) eine maximale Breite (41) im Bereich von 50 mm bis 550 mm, vorzugsweise 150 mm bis 350 mm, bevorzugt 200 mm bis 220 mm, und/oder eine maximale Höhe (42) im Bereich von 5 mm bis 15 mm, vorzugsweise 10 mm bis 12 mm aufweist.

5. Gehäuseanordnung (10) nach einem der vorhergehenden Ansprüche,
**dadurch gekennzeichnet,**
**dass** an der Wandung (30) zumindest eine Luftaustrittsöffnung (70) vorgesehen ist, insbesondere auf einer der Lüftungsausnehmungen (50) gegenüberliegenden Seite der Wandung (30), wobei die Luftaustrittsöffnung (70) eine Luftaustrittsgeometrie (71) aufweist, insbesondere mit mindestens zwei parallel angeordneten und gleich ausgerichteten Luftaustrittswandungen (72), um das durch die Lüftungsausnehmungen (50), insbesondere Lufteintrittsausnehmungen (50), in den Innenraum (40) eingetretene Fluid (5) aus dem Innenraum (40), bevorzugt entsprechend der Ausrichtung der Luftaustrittswandungen (72), zu führen.

6. Gehäuseanordnung (10) nach einem der vorhergehenden Ansprüche,
**dadurch gekennzeichnet,**
**dass** durch die Lüftungsausnehmungen (50) des Rahmenelements (20) komplementär mit den Lüftungsausnehmungen (50) eines benachbarten weiteren Rahmenelements (21) ein Spalt (60) mit einer Spaltöffnung bildbar ist, wobei vorzugsweise die Spaltöffnung eine maximale Erstreckung (61) von 1 mm bis 50 mm, bevorzugt 5 mm bis 20 mm, besonders bevorzugt 8 mm bis 10 mm aufweist.

7. Gehäuseanordnung (10) nach einem der vorhergehenden Ansprüche,
**dadurch gekennzeichnet,**
**dass** die Lüftungsausnehmungen (50) derart angeordnet und/oder ausgerichtet sind, dass durch die Lüftungsausnehmungen (50), insbesondere durch die Verbindung an ein weiteres Rahmenelement (21), ein außenseitiger Spalt (65) im Bereich der Außenwandung (32) und ein innenseitiger Spalt (66) im Bereich der Innenwandung (31) ausbildbar ist, wobei insbesondere der außenseitige Spalt (65) versetzt vom innenseitigen Spalt (66) angeordnet ist.

8. Gehäuseanordnung (10) nach einem der vorhergehenden Ansprüche,
**dadurch gekennzeichnet,**
**dass** die Batteriezelle (1) im Innenraum (40) zwischen zwei benachbart angeordneten Rahmenelementen (20, 21) lagerbar ist, wobei insbesondere die Lüftungsausnehmungen (50) derart angeordnet und/oder wechselseitig ausgerichtet sind, dass die Oberfläche der Batteriezelle (1) beidseitig, insbesondere abwechselnd vorder- und rückseitig, durch ein durch die Lüftungsausnehmungen (50) strömendes Fluid (5) anströmbar ist.

9. Gehäuseanordnung (10) nach einem der vorhergehenden Ansprüche,
**dadurch gekennzeichnet,**
**dass** die Wandung (30) eine maximale Wandstärke (33) im Bereich von 1 cm bis 10 cm, vorzugsweise 2 cm bis 5 cm, bevorzugt 3 cm bis 4 cm aufweist, und/oder dass das Rahmenelement (20) elektrisch isolierend ausgestaltet ist, und insbesondere ein elektrisch isolierendes und/oder fluiddichtes Polymer aufweist.

10. Gehäuseanordnung (10) nach einem der vorhergehenden Ansprüche,
**dadurch gekennzeichnet,**
**dass** zumindest ein Verbindungselement (80) vorgesehen ist, um das Rahmenelement (20) mit weiteren Rahmenelementen (21) zu verbinden, und/oder dass das Rahmenelement (20) und/oder zumindest ein Verbindungselement (80) derart ausgestaltet ist, dass das Rahmenelement (20) mit weiteren Rahmenelementen (21) modular verbindbar ist.

11. Batteriesystem (2), aufweisend zumindest eine Batteriezelle (1), mit einer Gehäuseanordnung (10) nach einem der vorhergehenden Ansprüchen, wobei die Batteriezelle (1) in einem Innenraum (40) gelagert ist, und der Innenraum (40) durch eine Wandung (30) zumindest eines Rahmenelements (20), und insbesondere eines benachbart dazu angeordneten weiteren Rahmenelements (21), gebildet ist, wobei an der Wandung (30) mehrere Lüftungsausnehmungen (50) vorgesehen sind, wobei die Lüftungsausnehmungen (50) eine derartig wechselnde Ausrichtung aufweisen, dass der Eintritt eines Fluids (5) durch die Lüftungsausnehmungen (50) wechselseitig erfolgen kann.

12. Lüftungssystem (4), insbesondere zum Kühlen und/oder Heizen eines Batteriesystems (2), insbesondere nach Anspruch 11, wobei das Lüftungssystem (4) mindestens ein Gebläse (6) und zumindest einen Kanal (8) umfasst, wobei mit dem Gebläse (6) ein Fluid (5) durch den Kanal (8) zu mindestens zwei Lüftungsausnehmungen (50) einer Gehäuseanordnung (10) förderbar ist, wobei die Gehäuseanordnung (10) zumindest ein Rahmenelement (20) umfasst, welches eine Wandung (30) und einen durch die Wandung (30) gebildeten Innenraum (40) zur Aufnahme mindestens einer Batteriezelle (1) des Batteriesystems (2) aufweist, wobei an der Wandung (30) die Lüftungsausnehmungen (50) vorgesehen sind, wobei die Lüftungsausnehmungen (50) eine derartig wechselnde Ausrichtung aufweisen, dass der Eintritt des Fluids (5) durch die Lüftungsausnehmungen (50) wechselseitig erfolgen kann.

13. Lüftungssystem (4) nach Anspruch 12,
**dadurch gekennzeichnet,**
**dass** die Lüftungsausnehmungen (50), insbesondere Lufteintrittsausnehmungen (50), und/oder zumindest eine Luftaustrittsöffnung (70) derart ausgeführt sind, dass bei aktiviertem Gebläse (6) ein durchschnittlicher statischer Druck auftritt, welcher mindestens dem 2-fachen oder 2,5-fachen oder 5-fachen des maximalen oder durchschnittlichen dynamischen Drucks entspricht, und/oder das Gebläse (6) mit einem Wärmetauscher (7) verbunden ist, um das Fluid (5) zu kühlen und/oder zu erwärmen.

14. Lüftungssystem (4) nach einem der Ansprüche 12 bis 13,
**dadurch gekennzeichnet,**
**dass** ein Rückströmkanal (9) vorgesehen ist, und der Rückströmkanal (9), zur Aufnahme des Fluids (5), mit der Wandung (30) im Bereich von zumindest einer Luftaustrittsöffnung (70) der Gehäuseanordnung (10) verbunden ist, wobei insbesondere der Kanal (8) und/oder der Rückströmkanal (9) einen Durchmesser aufweist, welcher mindestens dem 2-fachen oder 4-fachen oder 6-fachen des maximalen Durchmessers der Lüftungsausnehmungen (50) entspricht.

15. Verfahren zum Kühlen und/oder Heizen eines Batteriesystems (2), nach Anspruch 11, und/oder zumindest einer Batteriezelle (1), wobei zumindest eine Gehäuseanordnung (10), insbesondere nach einem der Ansprüche 1 bis 13, vorgesehen ist, und die Gehäuseanordnung (10) zumindest ein Rahmenelement (20) umfasst, welches eine Wandung (30) und einen durch die Wandung (30) gebildeten Innenraum (40) zur Aufnahme der Batteriezelle (1) aufweist, wobei an der Wandung (30) mehrere Lüftungsausnehmungen (50) vorgesehen sind, wobei die Lüftungsausnehmungen (50) eine derartig wechselnde Ausrichtung aufweisen, dass der Eintritt eines Fluids (5) durch die Lüftungsausnehmungen (50) wechselseitig erfolgt.

## Claims

1. Housing assembly (10) for at least one battery cell (1), preferably a lithium battery cell (1) and/or a lithium pouch cell (1), wherein the housing assembly (10) comprises at least one frame element (20) which has a wall (30) and an interior space (40) formed by the wall (30) for receiving the battery cell (1), wherein a plurality of ventilation recesses (50) are provided on the wall (30), wherein the ventilation recesses (50) have an alternating orientation such that the entry of a fluid (5) through the ventilation recesses (50) can take place alternately.

2. Housing assembly (10) according to claim 1,
**characterized in that**
the wall (30) has an outer wall (32) and an inner wall (31), a ventilation geometry (52) of this type being provided in the region of the ventilation recesses (50) between the outer wall (32) and the inner wall (31), **in that** an intermediate space (51) is formed by the outer wall (32) and the inner wall (31), the intermediate space (51) in particular forming the ventilation recess (50), and/or the frame element (20) is formed from a plastic, and in particular is an injection-molded part.

3. Housing assembly (10) according to claim 1 or 2,
**characterized in that**
the ventilation geometry (52) has at least two fluid-tight wall means (34) and/or at least one intermediate wall (35), which are arranged in particular in a labyrinth-like manner, preferably in order to form secondary chambers (53) in the intermediate space (51).

4. Housing assembly (10) according to any one of the preceding claims,
**characterized in that**
the interior space (40) has a maximum width (41) in the range from 50 mm to 550 mm, preferably 150 mm to 350 mm, preferably 200 mm to 220 mm, and/or a maximum height (42) in the range from 5 mm to 15 mm, preferably 10 mm to 12 mm.

5. Housing assembly (10) according to any one of the preceding claims,
**characterized in that**
at least one air outlet opening (70) is provided on the wall (30), in particular on a side of the wall (30) opposite the ventilation recesses (50), the air outlet opening (70) having an air outlet geometry (71) in particular with at least two air outlet walls (72) arranged in parallel and aligned in the same way, in order to guide the fluid (5) which has entered the interior (40) through the ventilation recesses (50), in particular air inlet recesses (50), out of the interior (40), preferably in accordance with the alignment of the air outlet walls (72).

6. Housing assembly (10) according to any one of the preceding claims,
**characterized in that**
a gap (60) with a gap opening can be formed through the ventilation recesses (50) of the frame element (20) complementary with the ventilation recesses (50) of an adjacent further frame element (21), the gap opening preferably having a maximum extension (61) of 1 mm to 50 mm, preferably 5 mm to 20 mm, particularly preferably 8 mm to 10 mm.

7. Housing assembly (10) according to any one of the preceding claims,
**characterized in that**
the ventilation recesses (50) are arranged and/or aligned in such a way that an outside gap (65) can be formed in the region of the outer wall (32) and an inside gap (66) can be formed in the region of the inner wall (31) by the ventilation recesses (50), in particular by the connection to a further frame element (21), the outside gap (65) in particular being arranged offset from the inside gap (66).

8. Housing assembly (10) according to any one of the preceding claims,
**characterized in that**
the battery cell (1) can be stored in the interior (40) between two adjacently arranged frame elements (20, 21), the ventilation recesses (50) in particular being arranged and/or aligned alternately in such a way that the surface of the battery cell (1) can be flowed against on both sides, in particular alternately on the front and rear sides, by a fluid (5) flowing through the ventilation recesses (50).

9. Housing assembly (10) according to any one of the preceding claims,
**characterized in that**
the wall (30) has a maximum wall thickness (33) in the range from 1 cm to 10 cm, preferably 2 cm to 5 cm, preferably 3 cm to 4 cm, and/or **in that** the frame element (20) is designed to be electrically insulating, and in particular has an electrically insulating and/or fluid-tight polymer.

10. Housing assembly (10) according to any one of the preceding claims,
**characterized in that**
at least one connecting element (80) is provided in order to connect the frame element (20) to further frame elements (21), and/or **in that** the frame element (20) and/or at least one connecting element (80) is designed such that the frame element (20) can be connected to further frame elements (21) in a modular manner.

11. Battery system (2), having at least one battery cell (1), having a housing assembly (10) according to one of the preceding claims, the battery cell (1) being mounted in an interior space (40), and the interior space (40) being formed by a wall (30) of at least one frame element (20), and in particular of a further frame element (21) arranged adjacent thereto, and in particular a further frame element (21) arranged adjacent thereto, wherein a plurality of ventilation recesses (50) are provided on the wall (30), wherein the ventilation recesses (50) have an alternating orientation such that the entry of a fluid (5) through the ventilation recesses (50) can take place alternately.

12. Ventilation system (4), in particular for cooling and/or heating a battery system (2), in particular according to claim 11, wherein the ventilation system (4) comprises at least one fan (6) and at least one duct (8), wherein a fluid (5) can be conveyed by the fan (6) through the duct (8) to at least two ventilation recesses (50) of a housing assembly (10), wherein the housing assembly (10) comprises at least one frame element (20) which has a wall (30) and an interior space (40) formed by the wall (30) for accommodating at least one battery cell (1) of the battery system (2), the ventilation recesses (50) being provided on the wall (30), the ventilation recesses (50) having an alternating orientation such that the fluid (5) can enter through the ventilation recesses (50) alternately.

13. Ventilation system (4) according to claim 12,
**characterized in that**
the ventilation recesses (50), in particular air inlet recesses (50), and/or at least one air outlet opening (70) are designed in such a way that, when the fan (6) is activated, an average static pressure occurs which corresponds to at least 2 times or 2.5 times or 5 times the maximum or average dynamic pressure, and/or the fan (6) is connected to a heat exchanger (7) in order to cool and/or heat the fluid (5).

14. Ventilation system (4) according to any one of claims 12 to 13,
**characterized in that**
a return flow duct (9) is provided, and the return flow duct (9), for receiving the fluid (5), is connected to the wall (30) in the region of at least one air outlet opening (70) of the housing arrangement (10), the duct (8) and/or the return flow duct (9) in particular having a diameter which corresponds to at least 2 times or 4 times or 6 times the maximum diameter of the ventilation recesses (50).

15. Method for cooling and/or heating a battery system (2), according to claim 11, and/or at least one battery cell (1), wherein at least one housing assembly (10), in particular according to one of claims 1 to 13, is provided, and the housing assembly (10) comprises at least one frame element (20) which has a wall (30) and an interior space (40) formed by the wall (30) for accommodating the battery cell (1), a plurality of ventilation recesses (50) being provided on the wall (30), the ventilation recesses (50) having an alternating orientation such that the entry of a fluid (5) through the ventilation recesses (50) takes place alternately.

## Revendications

1. Ensemble de boîtier (10) pour au moins un élément de batterie (1), de préférence un élément de batterie au lithium (1) et/ou un élément de pochette au lithium (1), l'ensemble de boîtier (10) comprenant au moins un élément de cadre (20) qui présente une paroi (30) et un espace intérieur (40) formé par la paroi (30) pour recevoir l'élément de batterie (1), plusieurs évidements d'aération (50) étant prévus sur la paroi (30), les évidements d'aération (50) présentant une orientation alternée de telle sorte que l'entrée d'un fluide (5) par les évidements d'aération (50) peut s'effectuer en alternance.

2. Ensemble de boîtier (10) selon la revendication 1,
**caractérisé en ce que**
la paroi (30) présente une paroi extérieure (32) et une paroi intérieure (31), une géométrie d'aération (52) réalisée de cette manière étant prévue dans la zone des évidements d'aération (50) entre la paroi extérieure (32) et la paroi intérieure (31), qu'un espace intermédiaire (51) est formé par la paroi extérieure (32) et la paroi intérieure (31), l'espace intermédiaire (51) formant notamment l'évidement d'aération (50), et/ou l'élément de cadre (20) est réalisé en une matière plastique, et est notamment une pièce moulée par injection.

3. Ensemble de boîtier (10) selon la revendication 1 ou 2,
**caractérisé en ce que**
la géométrie d'aération (52) présente au moins deux moyens de paroi (34) étanches aux fluides et/ou au moins une paroi intermédiaire (35), qui sont disposés en particulier à la manière d'un labyrinthe, pour former de préférence des chambres secondaires (53) dans l'espace intermédiaire (51).

4. Ensemble de boîtier (10) selon l'une quelconque des revendications précédentes,
**caractérisé en ce que**
l'espace intérieur (40) présente une largeur maximale (41) dans la plage de 50 mm à 550 mm, de préférence de 150 mm à 350 mm, de préférence de 200 mm à 220 mm, et/ou une hauteur maximale (42) dans la plage de 5 mm à 15 mm, de préférence de 10 mm à 12 mm.

5. Ensemble de boîtier (10) selon l'une quelconque des revendications précédentes,
**caractérisé en ce qu'**
il est prévu sur la paroi (30) au moins une ouverture de sortie d'air (70), en particulier sur un côté de la paroi (30) opposé aux évidements de ventilation (50), l'ouverture de sortie d'air (70) présentant une géométrie de sortie d'air (71), en particulier avec au moins deux parois de sortie d'air (72) disposées parallèlement et orientées de la même manière, afin de guider le fluide (5) entré dans l'espace intérieur (40) par les évidements de ventilation (50), en particulier les évidements d'entrée d'air (50), hors de l'espace intérieur (40), de préférence selon l'orientation des parois de sortie d'air (72).

6. Ensemble de boîtier (10) selon l'une quelconque des revendications précédentes,
**caractérisé en ce qu'**
une fente (60) avec une ouverture de fente peut être formée par les évidements d'aération (50) de l'élément de cadre (20) de manière complémentaire avec les évidements d'aération (50) d'un autre élément de cadre (21) voisin, l'ouverture de fente présentant de préférence une extension maximale (61) de 1 mm à 50 mm, de préférence de 5 mm à 20 mm, de manière particulièrement préférée de 8 mm à 10 mm.

7. Ensemble de boîtier (10) selon l'une quelconque des revendications précédentes,
**caractérisé en ce que**
les évidements d'aération (50) sont disposés et/ou orientés de telle sorte que, par les évidements d'aération (50), en particulier par la liaison à un autre élément de cadre (21), une fente côté extérieur (65) peut être formée dans la zone de la paroi extérieure (32) et une fente côté intérieur (66) peut être formée dans la zone de la paroi intérieure (31), la fente côté extérieur (65) étant en particulier décalée par rapport à la fente côté intérieur (66).

8. Ensemble de boîtier (10) selon l'une quelconque des revendications précédentes,
**caractérisé en ce que**
l'élément de batterie (1) peut être stocké dans l'espace intérieur (40) entre deux éléments de cadre (20, 21) disposés au voisinage l'un de l'autre, les évidements d'aération (50) étant en particulier disposés et/ou orientés en alternance de telle sorte que la surface de l'élément de batterie (1) peut être approchée des deux côtés, en particulier alternativement à l'avant et à l'arrière, par un fluide (5) s'écoulant à travers les évidements d'aération (50).

9. Ensemble de boîtier (10) selon l'une quelconque des revendications précédentes,
**caractérisé en ce que**
la paroi (30) présente une épaisseur de paroi maximale (33) dans la plage de 1 cm à 10 cm, de préférence de 2 cm à 5 cm, de préférence de 3 cm à 4 cm, et/ou **en ce que** l'élément de cadre (20) est conçu de manière à être électriquement isolant, et présente en particulier un polymère électriquement isolant et/ou étanche aux fluides.

10. Ensemble de boîtier (10) selon l'une quelconque des revendications précédentes,
**caractérisé en ce qu'**
il est prévu au moins un élément de liaison (80) pour relier l'élément de cadre (20) à d'autres éléments de cadre (21), et/ou **en ce que** l'élément de cadre (20) et/ou au moins un élément de liaison (80) est conçu de telle sorte que l'élément de cadre (20) peut être relié de manière modulaire à d'autres éléments de cadre (21).

11. Système de batterie (2), présentant au moins une cellule de batterie (1), avec un ensemble de boîtier (10) selon l'une des revendications précédentes, la cellule de batterie (1) étant logée dans un espace intérieur (40), et l'espace intérieur (40) étant formé par une paroi (30) d'au moins un élément de cadre (20), et en particulier d'un autre élément de cadre (21) disposé au voisinage de celui-ci, plusieurs évidements d'aération (50) étant prévus sur la paroi (30), les évidements d'aération (50) présentant une orientation alternée telle que l'entrée d'un fluide (5) par les évidements d'aération (50) peut s'effectuer en alternance.

12. Système de ventilation (4), en particulier pour le refroidissement et/ou le chauffage d'un système de batterie (2), en particulier selon la revendication 11, le système de ventilation (4) comprenant au moins un ventilateur (6) et au moins un canal (8), un fluide (5) pouvant être transporté avec le ventilateur (6) à travers le canal (8) vers au moins deux évidements de ventilation (50) d'un ensemble de boîtier (10), l'ensemble de boîtier (10) comprenant au moins un élément de cadre (20), qui présente une paroi (30) et un espace intérieur (40) formé par la paroi (30) pour recevoir au moins un élément de batterie (1) du système de batterie (2), les évidements d'aération (50) étant prévus sur la paroi (30), les évidements d'aération (50) présentant une orientation alternée telle que l'entrée du fluide (5) par les évidements d'aération (50) peut se faire en alternance.

13. Système de ventilation (4) selon la revendication 12,
**caractérisé en ce que**
les évidements de ventilation (50), en particulier les évidements d'entrée d'air (50), et/ou au moins un orifice de sortie d'air (70) sont réalisés de telle sorte que, lorsque la soufflante (6) est activée, il se produit une pression statique moyenne qui correspond au moins à 2 fois ou 2,5 fois ou 5 fois la pression maximale ou moyenne dynamique, et/ou la soufflante (6) est reliée à un échangeur de chaleur (7) pour refroidir et/ou réchauffer le fluide (5).

14. Système de ventilation (4) selon l'une quelconque des revendications 12 à 13,
**caractérisé en ce qu'**
il est prévu un canal de retour (9), et le canal de retour (9), pour recevoir le fluide (5), est relié à la paroi (30) dans la zone d'au moins une ouverture de sortie d'air (70) de l'ensemble de boîtier (10), le canal (8) et/ou le canal de retour (9) présentant en particulier un diamètre qui correspond au moins à 2 fois ou 4 fois ou 6 fois le diamètre maximal des évidements de ventilation (50).

15. Procédé de refroidissement et/ou de chauffage d'un système de batterie (2), selon la revendication 11, et/ou d'au moins un élément de batterie (1), dans lequel il est prévu au moins un ensemble de boîtier (10), en particulier selon l'une des revendications 1 à 13, et l'ensemble de boîtier (10) comprend au moins un élément de cadre (20), lequel présente une paroi (30) et un espace intérieur (40) formé par la paroi (30) pour recevoir l'élément de batterie (1), plusieurs évidements d'aération (50) étant prévus sur la paroi (30), les évidements d'aération (50) présentant une orientation alternée de telle sorte que l'entrée d'un fluide (5) par les évidements d'aération (50) s'effectue en alternance.
